# EUROPEAN PATENT SPECIFICATION

(11) **EP 1 139 604 B1**
(45) Date of publication and mention of the grant of the patent: **23.08.2006**
(21) Application number: 01302698.4
(22) Date of filing: 23.03.2001
(51) Int. Cl.: H04L 12/24, H04L 29/06

(54) **Online technical support to support the elimination of problems arising in a device**
Online technische Assistenz zur Unterstützung der Lösung von Probleme in einem Gerät
Support technique en ligne pour aider à remédier à des problèmes dans un appareil

(30) Priority: 29.03.2000 JP 2000090785; 27.02.2001 JP 2001051460
(43) Date of publication of application: 04.10.2001
(73) Proprietor: SEIKO EPSON CORPORATION, Shinjuku-ku Tokyo (JP)
(72) Inventor: Ziegler, Bruno, 92305 Levallois-Perret Cedex (FR); Butler, Peter, Hemel Hempstead HP2 7TJ (GB); Yoshino, Masumi, Suwa-shi, Nagano-ken, 392-8502 (JP); Akasaka, Yoshihiko, Suwa-shi, Nagano-ken, 392-8502 (JP); Haas, Marita c/o Epson Deutschland GmbH, 40549 Düsseldorf (DE)
(74) Representative: Sturt, Clifford Mark

(56) References cited:
- US-A- 5 983 369
- US-A- 6 032 184
- POLERETZKY Z ET AL: "The call center & e-commerce convergence" DIALOG ABI/INFORM(R), XP002949410
- KIGER R: "Expert system and Lotus Notes applications for retrieval of problem-solving knowledge and information" PROFESSIONAL COMMUNICATION CONFERENCE, 1996. IPCC '96 PROCEEDINGS. COMMUNICATION ON THE FAST TRACK., INTERNATIONAL SARATOGA SPRINGS, NY, USA 18-20 SEPT. 1996, NEW YORK, NY, USA,IEEE, US, 18 September 1996 (1996-09-18), pages 344-350, XP010198155 ISBN: 0-7803-3689-5

## Description

### BACKGROUND OF THE INVENTION

### Field of the Invention

The present invention relates to an online support technique that gives online support to eliminate problems and troubles arising in a device.

### Description of the Related Art

The online support via the Internet becomes a common technique to support users who require elimination of a variety of troubles and problems arising in a diversity of devices including printers and scanners. One method of the online support utilizes electronic mails. When a problem arises in a device, the user transmits an electronic mail describing the details of the problem to an online support center managed by, for example, the manufacturer of the device. The online support center analyzes the cause of the problem based on the information written in the electronic mail and suggests the user a possible operation.

Another method of the online support provides support information for eliminating the problem, that is, online help, in the form of Web pages on the Internet. In general, possible operations and resolutions against common troubles and problems and those readily eliminated by the user are provided in the Web pages managed by the manufacturer of the device. The user simply refers to the support information according to the model of the device and the type of the problem, in order to eliminate the problem.

The problems and troubles arising in the device often have a common cause. In many cases, these problems and troubles are ascribed to the carelessness of the users and are readily eliminated. The E mail support is, however, required to individually respond to the similar questions of the users. This undesirably increases the loading on the E mail support and interferes with the quick response to the significant problems and troubles that can not be eliminated readily by the user.

As described above, the possible operations and resolutions are provided against the troubles and problems readily eliminated by the user as the support information. In the prior art online support, however, such support information is not sufficiently utilized.

The user generally can not give a sufficient description with regard to the working status of the device and the problem arising in the device. Such users do not give the sufficient information required to elucidate the cause of the problem in the E mail support. Namely it is difficult for such users to gain the efficient E mail support. The users who can not sufficiently describe the problem generally can not solve even an easy problem by the self efforts. This accordingly enhances the loading on the E mail support.

US patent 5,983,369, issued on 9th November 1999, relates to an online computer support system using simultaneous and alternating transfer of different data types, including voice, image and video. A customer service representative can provide prepared tutorials or information to the customer in the form of text, diagrams and video with synchronized sound. Software at the user computer side automatically interrogates the user computer to determine information about hardware and software components needed to solve problems being experienced by the user. The customer service representative can control the user's computer remotely. A database, indexed by information obtained from the user's computer, tracks warranty, support history and other information. A preventative maintenance function detects components having sporadic problems before they fail and also flags up components as they approach the end of their predicted life.

A paper entitled "The Call Center & E-Commerce Convergence" by Zoltan Poleretzky, Russ Cohn and Steven M. Gimnicher and published in January 1999, describes the impact that Web-based electronic commerce is having on the nature of customer interaction and the kinds of assistance and support which customers can expect. It describes an upshot of the greater customer interaction which takes place, which is a greater volume of e-mail correspondence which takes place. Part of the solution to this is providing a measure of self-service - that is, helping customers to help themselves. When this is insufficient, human interaction then is necessary. This may take the form of circuit-switched callbacks, voice-over IP, etc.. As knowledge is increased due to customer interaction, such knowledge is added to a repository so that future customers can be similarly helped.

### SUMMARY OF THE INVENTION

The object of the present invention is thus to provide an online support technique that relieves loading on E mail support, which supports normal operations of a device by utilizing electronic mails. The object is also to provide a technique that facilitates elucidation of the cause of a problem arising in a device in the course of online support.

At least part of the above and the other related objects is attained in a first aspect of the invention by an online support method as defined in claim 1.

In a second aspect of the invention, an online support system is provided as recited in claim 15.

A client that gains online support from a predetermined support server to eliminate a problem arising in a device of the client has the features set out in claim 16 and therefore forms a third aspect of the invention.

The invention in a fourth aspect thereof provides a recording medium as recited in claim 17.

Embodiments of the invention are set forth in the dependent claims.

The above-mentioned and other objects, features, aspects, and advantages of the present invention will become more apparent from the following detailed description of the preferred embodiment with the accompanying drawings.

### BRIEF DESCRIPTION OF THE DRAWINGS

Fig. 1 shows one configuration of an online support system that supports normal operations of printers;
Fig. 2 is a flowchart showing a procedure of utilizing online support;
Fig. 3 shows a display of a setting window PP provided by a printer driver, which includes a link to the online support;
Fig. 4 shows another window display including the link as a first modified example;
Fig. 5 shows still another window display including the link as a second modified example;
Fig. 6 shows a sequential change of windows in the online support;
Fig. 7 shows an example of support information;
Fig. 8 shows a window display when a problem is not cumulated by any of possible operations prepared in advance as support information;
Fig. 9 shows a window display providing the support information as a modified example;
Fig. 10 shows a transmission form as an example; and
Fig. 11 shows the configuration of another online support system in one modified example.

### DESCRIPTION OF THE PREFERRED EMBODIMENTS

The technique of the present invention is, for example, applicable to online support that supports normal operations of printers. This is explained below in the following sequence as one preferable mode of carrying out the invention:
A. Configuration of System
B. Online Support
B1. Link to Online Support
B2. Sequential Change of Windows in Online Support
B3. E mail Support
C. Modifications

### A. Configuration of System

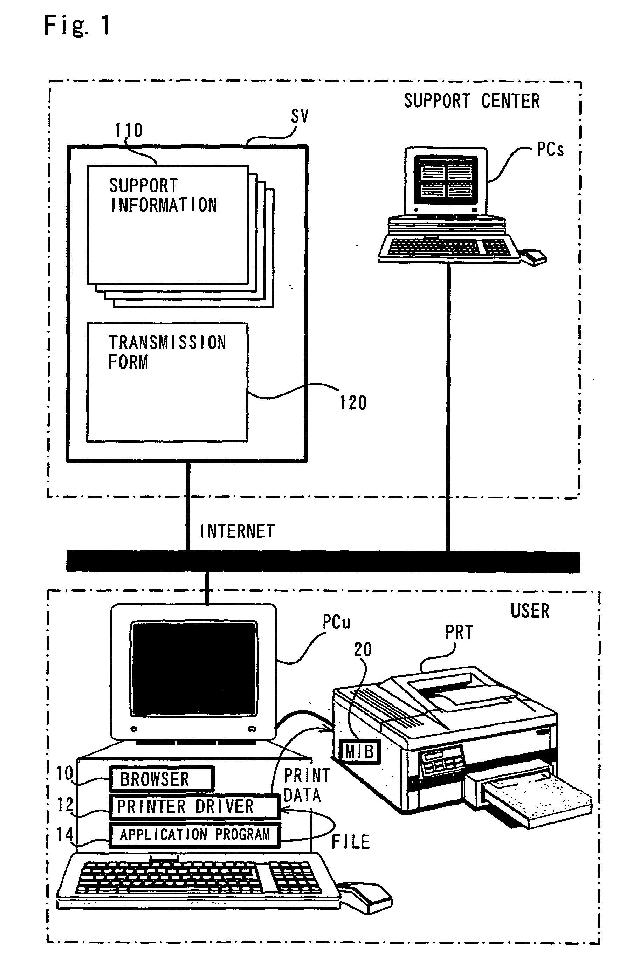

Fig. 1 shows one configuration of an online support system that supports normal operations of printers. The upper portion of the drawing shows the configuration of a system that gives online support of printers, whereas the lower portion of the drawing shows the configuration of a printer user's system that receives the online support. Any organization, party, or individual may provide the online support of printers. In this embodiment, for convenience of explanation, it is assumed that the printers' manufacturer gives the online support at the site called a support center.

The configuration of the printer user's system includes a page printer PRT connected to a computer PCu via a parallel cable. Although the page printer is used as the printer PRT in this embodiment, the target of the online support may be any of various printers, for example, an ink jet printer. Although the printer PRT is locally connected to the printer PCu via the parallel cable, the printer PRT may be connected to the computer PCu via a LAN (Local Area Network).

A plurality of programs working on a preset operating system are installed in the computer PCu. Here a browser 10 that is used to browse Web pages, a printer driver 12 that has functions to drive the printer PRT, and an application program 14 that generates document data and image data to be printed by the printer PRT. In a typical printing process, the application program 14 transfers a print command and a file to be printed to the printer driver 12. The printer driver 12 causes the input file to be subjected to rendering and other required processing and generates print data to be transmitted to the printer PRT. The printer PRT receives the print data via the parallel cable and carries out an actual printing operation. The printer PRT has an MIB 20, which is a database storing a working status of the printer PRT. The user gains access to the MIB 20 via the computer PCu, so as to obtain information with regard to settings of the working status and problems in the printer PRT.

The computer PCu is connected to the Internet. When some trouble or problem arises in the printer PRT, the user of the printer PRT gains mainly two types of online support via the Internet. The first online support utilizes Web pages to notify various pieces of support information. Typical operations and resolutions of frequently arising problems and troubles are provided in the Web pages as support information. The user adopts the browser 10 to gain access to the Web pages defined by a specified URL (uniform resource locator) and browse the support information in the Web pages, in order to attain self support with regard to the problem or the trouble.

The second online support utilizes electronic mails (hereinafter this type of online support is called the E mail support). The user inputs required pieces of information with regard to the problem or trouble in a predetermined transmission form and transmits the input information to the support center. The support center finds the possible cause of the problem or trouble, based on the transmitted information, and sends back the user an electronic mail describing a possible operation or resolution to eliminate the problem or trouble.

The support center providing such online support has the system of the following configuration. The support center includes a server SV that provides users with the support information written in the Web pages and the predetermined transmission form for the E mail support, and a computer PCs that actually carries out the E mail support. The server SV stores support information 110 displayed in the Web pages and data required for providing a transmission form 120 for the E mail support. In the structure of the embodiment, the support information 110 and the transmission form 120 are stored in the form of Web programs using CGI (common gateway interface). The support information 110 and the transmission form 120 may alternatively be stored in another form using HTML (hyper text markup language), Java (registered trademark), or Java Script (registered trademark). Although the support center of this embodiment uses includes the server and the computer, the support center may include only one server or a plurality of servers.

### B. Online Support

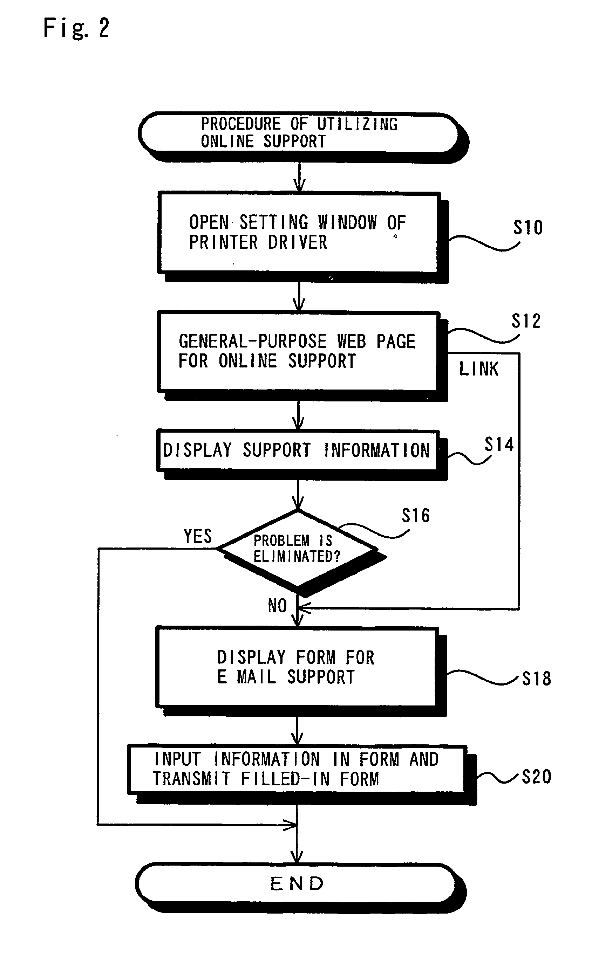

Fig. 2 is a flowchart showing a procedure of utilizing the online support. The procedure shown in Fig. 2 describes a flow of processes mainly from the user's side. The support center carries out a series of processing according to this procedure. From this point of view, the flowchart of Fig. 2 may partly be regarded as a process chart showing the series of processing executed by the support center.

The user opens a setting window of the printer driver 12 at step S10 and gains access to an online support general-purpose Web page, which is provided by the server SV on the Internet, via a link shown in the setting window to receive the online support at step S12. The online support has two different stages. In the first stage, the user browses the support information provided by the server SV, in order to eliminate the problem or the trouble by the user's own efforts (steps S14 and S16). In the second stage, the user sends an electronic mail to eliminate the problem or the trouble (steps S18 and S20). The first stage is called self support, and the second stage is called E mail support. The user obtains the E mail support by causing a predetermined transmission form to be displayed on the screen of the computer PCu at step S18, and inputting required pieces of information in the predetermined form and transmitting the filled-in form to the support center at step S20. In the arrangement of the embodiment, the user gains the E mail support in principle when the user can not eliminate the trouble or the problem (step S16) by browsing the support information (step S14). In the course of E mail support, the user may send and receive a plurality of E mails to and from the support center. For convenience of the user in such cases, there is a link to directly gain the E mail support on the general-purpose Web page without displaying the support information (step S14). The respective procedures are described in detail below.

### B1. Link to Online Support

As described above, the user who desires to receive the online support first causes the computer PCu to display the setting window of the printer 12, in order to gain access to the Web site for the online support (step S10 in the flowchart of Fig. 2). In the arrangement of the embodiment, the printer driver 12 has the function of causing the link to the online support to be displayed in the setting window. The link is displayed in the following manner.

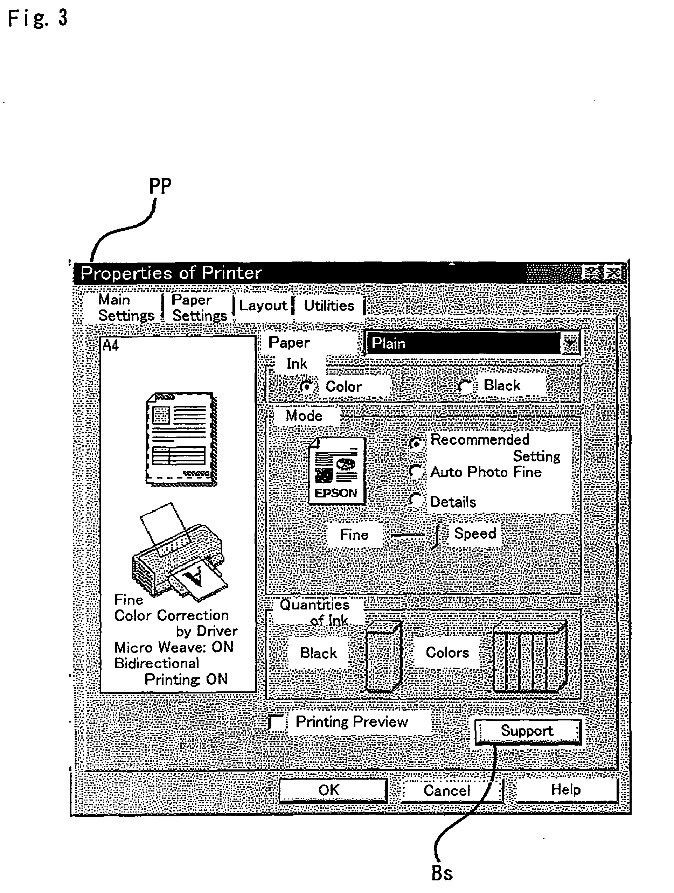

Fig. 3 shows a display of a setting window PP provided by the printer driver 12, which includes a link to the online support. The setting window PP is open when the user selects Printer Properties in a dialog box displayed on the screen of the computer PCu in response to a user's printing instruction. Displaying the setting window PP is one of the functions attained by the printer driver 12. The user specifies various settings, for example, paper used for printing and a print mode in the setting window PP. In the arrangement of the embodiment, a Support button Bs is also included in the setting window PP. The Support button Bs corresponds to the link to the online support at step S10 in the flowchart of Fig. 2. The printer driver 12 stores the URL of the Web page, which is to be accessed for the online support, corresponding to the Support button Bs. The user clicks the Support button Bs with a pointing device, such as a mouse, to gain access to the general-purpose Web page for the online support.

In the arrangement of the embodiment, the user first accesses the general-purpose Web page, which does not depend upon the printer model, the nation, or the language, in the process of online support as discussed later. This arrangement advantageously enables a common module with regard to the function of displaying the Support Button Bs to be used for any printer models, and thereby facilitates the manufacture of the printer driver 12. This arrangement also restricts the Web page that the user accesses first to a single general-purpose Web page, thus advantageously enabling the lower layer in the hierarchical structure to be flexibly changed. For example, such restriction allows a change from one page configuration that carries out classification according to the printer model in the first layer of the hierarchical structure and classification according to the type of problem or trouble in the lower, second layer of the hierarchical structure, to another page configuration that carries out classification according to the type of problem or trouble in the first layer of the hierarchical structure. The restriction of the Web page that the user accesses first enables flexible change of the page configuration without affecting the services of the online support. However, instead of the first link to the general-purpose web page, the link may bring directly a user to the online support related to his printer model inputted beforehand.

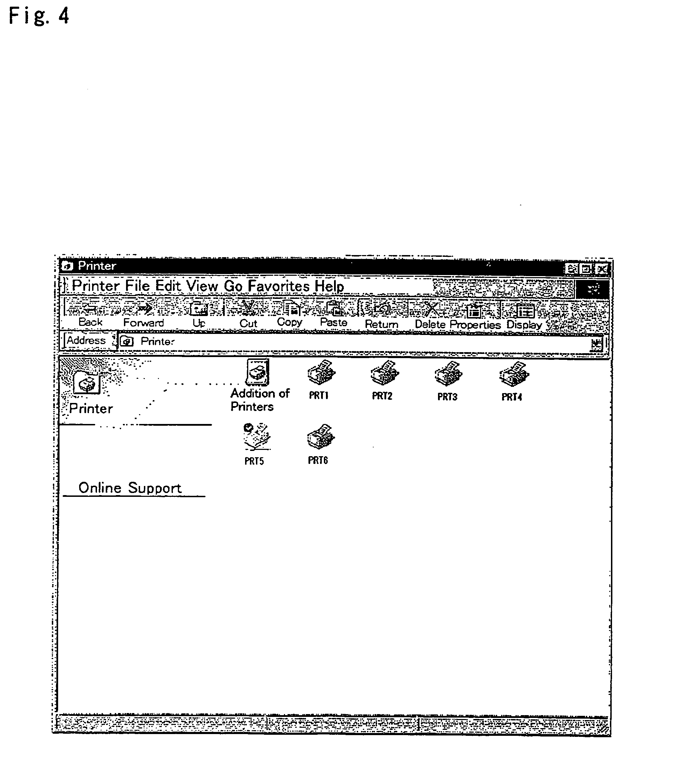

In the arrangement of the embodiment, the link to the online support is displayed in the setting window PP of the printer PRT. The display of the link is, however, not restricted to this application. Fig. 4 shows another window display including the link as a first modified example. This window is used to set printer ports and add and manage available printers in the computer PCu. In this first modified example, the link to the online support is shown in this window as an underlined Online Support option. The user clicks the underlined Online Support option to gain access to the general-purpose Web page for the online support. The link to the online support may be provided in a driver folder that is generated when each printer driver is installed in the computer PCu. In this case, the display format of Fig. 4 may be adopted.

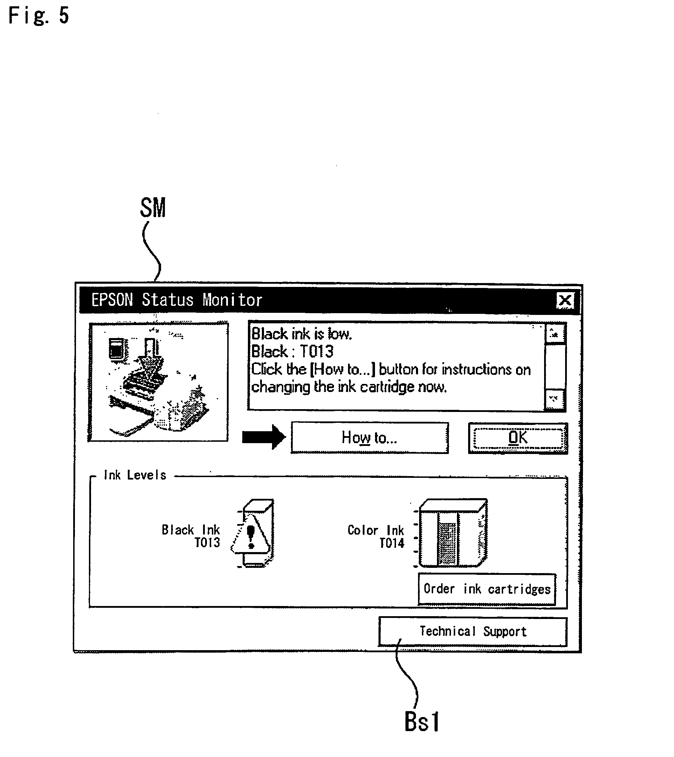

Fig. 5 shows still another window display including the link as a second modified example. In a status monitor of the computer PCu, a window SM shows the working status of the printer, such as the remaining quantities of inks. In this second modified example, the link to the online support is shown in this window SM as a Technical Support button Bs1. The user clicks the Technical Support button Bs1 to gain access to the general-purpose Web page for the online support.

In the embodiment and its modified examples discussed above, the link to the online support is shown in the setting window of the printer or another suitable window. This enhances the convenience of the access to the Web page for the online support. Another procedure directly specifies the URL allocated to the Web page for the online support on the browser for the access.

### B2. Sequential Change of Windows in Online Support

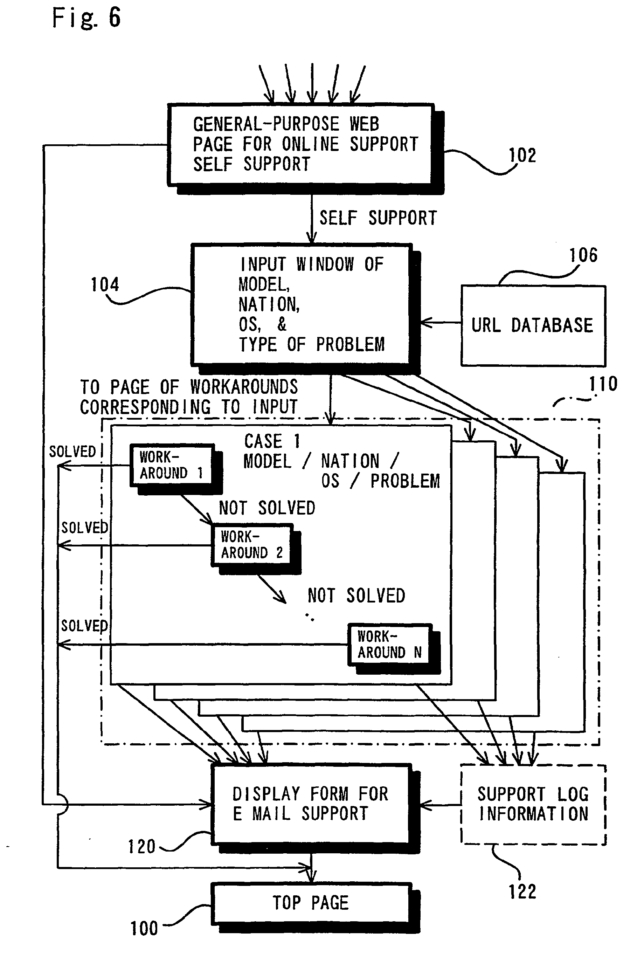

The following describes a sequential change of windows after the user gains access to the general-purpose Web page of the online support via any of the above links. Fig. 6 shows a sequential change of windows in the online support. Data in each page are transmitted from the server SV of the support center and are written in a Web language, for example, HTML. The Web pages that require the user to input information are provided by utilizing the CGI. The sequential change of windows shown in Fig. 6 corresponds to the data structure of the Web page stored in the server SV and represents the procedures of the online support executed by the server SV.

The online support first displays a general-purpose Web page 102. The users of various models, various nations, and various languages access the single general-purpose Web page 102. The general-purpose Web page 102 shows a diversity of links, for example, a link to self support and a link to E mail support.

When the user clicks the link to the self support, the displays changes to an input window 104 for specifying the individual state. The user inputs the model name of the printer, the nation where the printer is located, the operating system, and the type of the problem in the input window 104. In the structure of the embodiment, the user chooses an appropriate option among preset options with regard to each item. For example, the model names of the printers that are subject to the online support are displayed in the form of a dropdown menu, and the user chooses the model name of the own printer in the dropdown menu. The other pieces of information are input in a similar manner. The input of such information may, however, not be restricted to this application, but the user arbitrarily inputs such information, instead of the selection out of the preset options.

The URL of a Web page mapped to the problem is specified by referring to a URL database 106 stored in advance in the server SV based on the input information. Support information 110 specified by the URL is displayed in the Web page. The support information includes operations and resolutions to eliminate the problem. In the arrangement of this embodiment, the URL is specified by a hierarchical structure of 'model / nation / operating system / type of problem'. For example, when the model name of the printer is LP9000, the nation is JAPAN (expressed by a code JPN), and the operating system is Windows98 (registered trademark; expressed by a code Win98), the URL is specified as 'JP9000 / JPN / Win98 / ...' using the coded data. The hierarchical structure has the advantage of relatively readily specifying the URL. In the case where the URL of the support information corresponding to the problem input in the input window 104 is unequivocally specified in the URL database 106, such a hierarchical structure may not be required. In the structure of the embodiment, the support information 110 is stored in the server SV that provides the general-purpose Web page 102. The support information may alternatively be stored in an external server. For example, the support information 110 may be offered by a server provided for each nation, based on the information with regard to the nation input in the input window 104.

The support information is displayed stepwise in an interactive manner in response to requirements of the user. The procedure first provides the user with a first operation information (Workaround 1) to eliminate the problem. When the user's input shows that the problem is eliminated by Workaround 1, the online support is terminated and the display is returned to a top page 100. When the user's input shows that the problem is not eliminated by Workaround 1, on the other hand, the procedure provides the user with a second operation (Workaround 2). When the problem is eliminated by Workaround 2, the display is returned to the top page 100. When the problem is not eliminated by Workaround 2, on the other hand, the procedure successively provides the user possible operations stored in advance. The content of the online self-help support information may be updated for users satisfaction.

As shown in Fig. 6, in the arrangement of the embodiment, the user's browsing record of the support information is accumulated as support log information 122. The support log information 122 stores the URLs of the Web pages browsed by the user in a time series. In the structure of the embodiment, the support log information 122 is stored in the user's computer PCu. In the illustration of Fig. 6, the support log information 122 is shown by the broken line, for the purpose of discrimination from the information stored in the server SV The input window 104 and the support information 110 shown in Fig. 6 correspond to the process of self support (steps S14 and S16) shown in the flowchart of Fig. 2. The support log information 122 may be stored together with the information for specifying the user who gained the access, for example, the IP address and MAC address of the user, in the server SV or the support center's computer PCs.

### B3. E Mail Support

In some cases, the problem is not eliminated even when the user tries all the possible operations the resolutions stored in advance as the support information. In such cases, a link to the E mail support is shown in the window that provides a last possible operation N. When the user clicks this link, a transmission form 120 is displayed to transmit pieces of information with regard to the problem to the E mail support. The user inputs required pieces of information in the transmission form 120 and transmits the filled-in form to the support center. This terminates the online support and the display is returned to the top page 100. In the procedure of the embodiment, the support log information 122 representing the browsing record of the support information is attached to the information input in the transmission form 120. The E mail support may be carried out without the attachment of the support log information 122. The attachment of the support log information, however, advantageously narrows the range of possible causes of the problem and thus efficiently analyzes the cause of the problem. In the case where the user clicks a link to the E mail support in the general-purpose Web page 102, the transmission form 120 is also displayed for the E mail support.

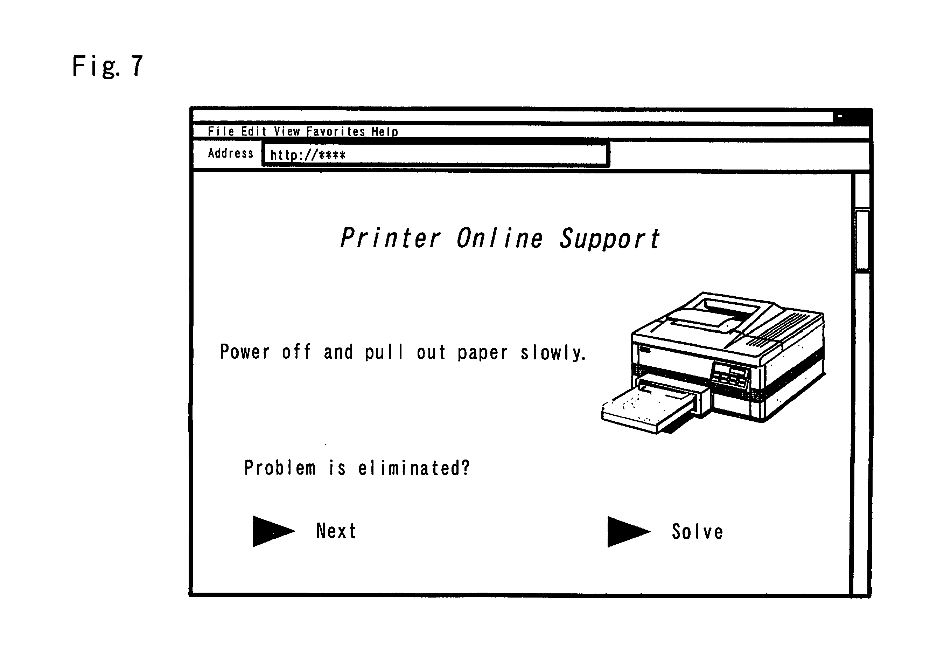

The interactive transmission of the support information is discussed below in one example where the problem of 'paper jam' arises in the printer. Fig. 7 shows an example of the support information in the form of a Web page displayed on the browser. In this Web page, the support information 'Power off and pull out paper slowly' is provided as Workaround 1 against the paper jam. The user tries this operation. When the problem is eliminated by this operation, the user clicks 'Solve'. Otherwise the user clicks 'Next'. When 'Solve' is clicked, the display is returned to the top page 100 as shown in Fig. 6. When 'Next' is clicked, on the other hand, a next possible operation is offered to the user. The user inputs the result of each operation and successively obtains support information in response to the user's requirement.

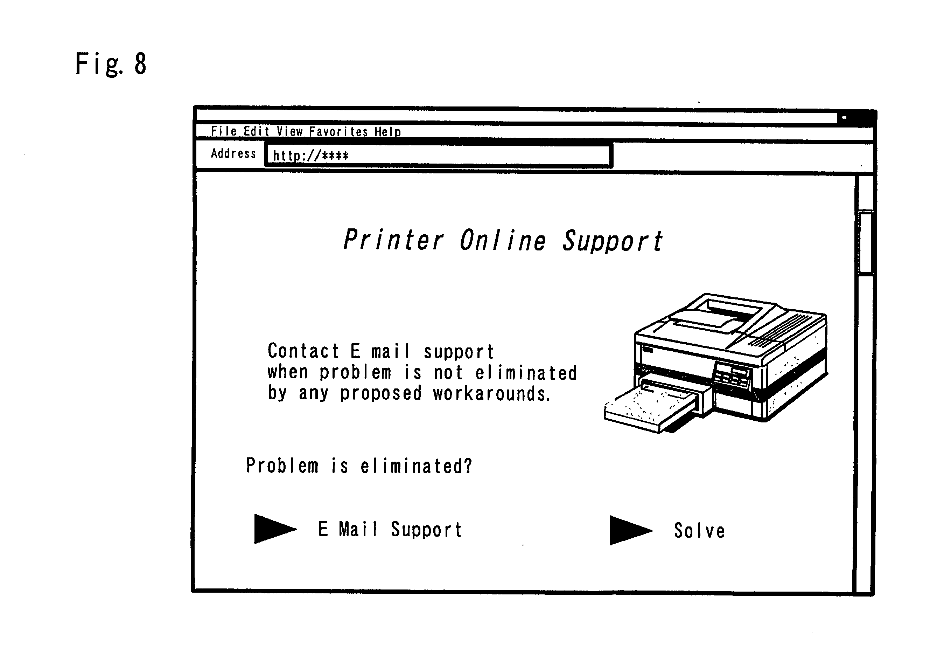

Fig. 8 shows a window display when a problem is not eliminated by any of possible operations prepared in advance as support information. As mentioned previously, the user gains E mail support in such cases. The window shows a link 'E Mail Support' as an option when the problem is not resolved. The user clicks the link to gain the E mail support.

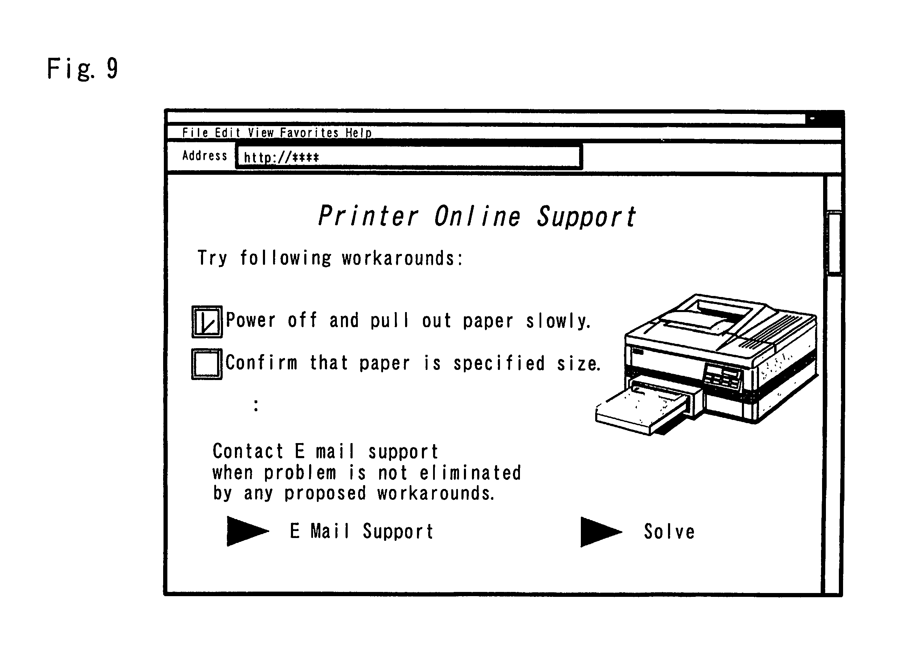

In the arrangement of the embodiment, the support information is successively provided (see Figs. 6 and 7). The procedure of providing the support information is, however, not restricted to this application. Fig. 9 shows a window display providing the support information against the problem of paper jam as a modified example. In the modified example, the possible operations to eliminate the problem are shown collectively in the form of a list of the support information. The user ticks the checkbox corresponding to the operation that the user has tried. The checkboxes are provided for convenience of the user and may be omitted. When the problem is not eliminated by any of these possible operations, the user clicks a link 'E Mail Support' to gain the E mail support.

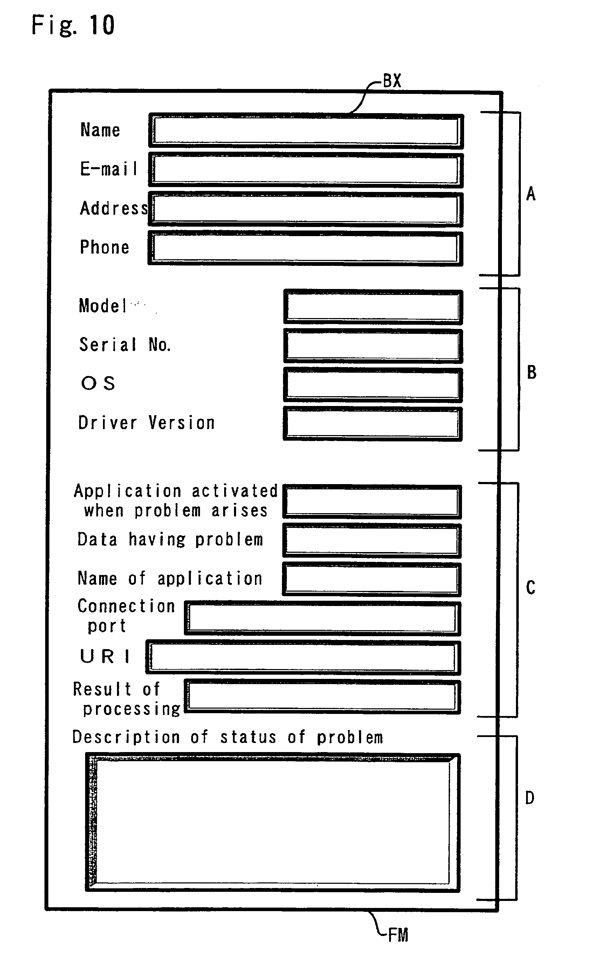

The E mail support is carried out when the user inputs required pieces of information in a predetermined transmission form and transmits the filled-in form to the support center. Fig. 10 shows a transmission form as an example. The arrangement of the embodiment displays the transmission form on the browser by means of the CGI. The user inputs required pieces of information in boxes BX of the respective items.

The transmission form includes parts A through C where the user inputs some typical pieces of information as well as a part D where the user describes the status arbitrarily. The parts A through C may be omitted if not required. But these parts A through C facilitate the input of typical information required for the E mail support. Even when there are some blanks in the parts A through C, the user gains the support to the extent that the provided information allows.

Pieces of information with regard to the user are input in the part A. In this embodiment, the part A includes the name, the E-mail address, the address, and the telephone number of the user. The support center uses these pieces of information to contact the user. An user's speaking language may be added to the part A so that the user could be contacted in his language by the support center near to his address.

Pieces of information with regard to the model of the printer having the problem are input in the part B. In this embodiment, the part B includes the model, the serial umber, the operating system, and the driver version. These pieces of information specify the basic conditions in the process of analyzing the cause of the problem.

Pieces of information for specifying the working status when the problem arises are input in the part C. In this embodiment, the part C includes the name of the application program activated in the user's computer PCu when the problem arises, the data processed at that time, and the name of the application program used for processing the data, the connection port of the printer, the URI (uniform resource indicator) of the printer, and the result of the processing by the printer when the problem arises. These pieces of information are used to analyze the cause of the problem as discussed below.

The application program activated when the problem arises represents the information regarding all the active application programs including the application program causing the problem. This information is used to estimate the marginal capacity of the memory resource in the computer PCu when the problem arises.

The data having the problem, that is, the application file, and the name of the application program used for processing the data are used to determine whether or not the problem found in the printing result is ascribed to the application program. The problem found in the printing result may be caused by abnormality of data transmitted from the application program to the printer driver 12 or by abnormality of print data generated through the processing of the printer driver 12 or an abnormal operation of the printer based on the print data. The input of the application file and the name of the application program enables the support center to investigate the application program and determine whether or not the cause of the problem is ascribed to the application program. The application file may be attached to the information input in the transmission form shown in Fig. 10 and directly transmitted. Another procedure inputs and transmits only file path information of the application file in the transmission form. In this case, the support center accesses the user's computer PCu based on the file path information and obtains the application file. The user may directly input the information with regard to the application file in the transmission form of Fig. 10. Alternatively the procedure may utilize an interface that enables input by the drag and drop of an icon representing the application file of interest.

The connection port of the printer represents the information regarding the communication environment between the computer PCu and the printer. Typical examples of the connection port of the printer include a parallel port, a serial port, a USB (universal serial bus). These pieces of information are used to specify the cause of the problem ascribed to the interface.

The support center uses the URI of the printer to access the resource in the printer. In the arrangement of the embodiment, the URI of the printer is used to gain access to the MIB in the printer. The access to the printer based on such information enables the support center to directly grasp the working status of the printer. Although the procedure of the embodiment accesses the MIB, the accessed data is not restricted to such uniformly provided data. Another application gains access to data provided specifically in the printer by means of a command specifically used in the printer.

The printing result processed by the printer in the presence of the problem represents the data with the problem most apparently appearing therein. This is accordingly effective for analysis of the cause of the problem. In the case of the printer, for example, the resulting print may be read by a scanner and transmitted to the support center. When the print data generated by the printer driver 12 is left in the computer PCu, the file of the print data may be transmitted to the support center. The user is generally not able to describe the problem sufficiently. Attachment of the printing result with the problem apparently appearing therein significantly enhances the efficiency of the analysis for the cause of the problem.

The procedure of the embodiment uses the transmission form shown in Fig. 10 for the E mail support. The transmission form may require additional items of information or, on the contrary, may exclude part of the items shown in Fig. 10.

As described above, when a problem arises in the printer, the online support system of the embodiment enables the user to gain online support and eliminate the problem. The link to the online support is provided, for example, in the setting window of the printer driver 12. This arrangement significantly improves the user's convenience for the online support.

The online support includes the self support that allows the user to browse the support information and try to eliminate the problem by the own efforts, and the E mail support utilizing the electronic mails. The user flexibly uses the appropriate support according to the circumstances. As for problems that are relatively easy to be solved, the user adopts the self support to quickly eliminate the problem. As for problems that are rather difficult to be solved, on the other hand, the user adopts the E mail support to gain the individual and concrete support for elimination of the problem.

In the arrangement of the embodiment that provides the two different types of online support, the configuration of the Web pages causes the user to try to eliminate the problem by the self support and to gain the E mail support only when the problem is not eliminated by the self support. This configuration accelerates the use of the self support. Since the subtle problems are resolved by the self support, the excessive use of the E mail support is effectively prevented. This arrangement thus desirably relieves the loading on the E mail support and enables the E mail support to concentrate on elimination of the significant problems that are not solved by the self support.

The technique of the embodiment utilizes the transmission form that includes the parts for the input of typical pieces of information to gain the E mail support. The arrangement of using such a transmission form enables the support center to obtain the pieces of information required for specifying the cause of the problem, thus offering the user the efficient resolution. The printing result processed by the printer is attached to the transmission form as the data with the problem apparently appearing therein. This further enhances the efficiency of the specification for the cause of the problem. The processed image is the most effective means to analyze the problem arising in the device that inputs or output images, such as the printer. The arrangement of the embodiment also attaches the browsing record of the self support to the transmission form. This enables the support center to estimate the operations that the user has tried to eliminate the problem and thus to narrow the range of possible causes of the problem.

### C. Modifications

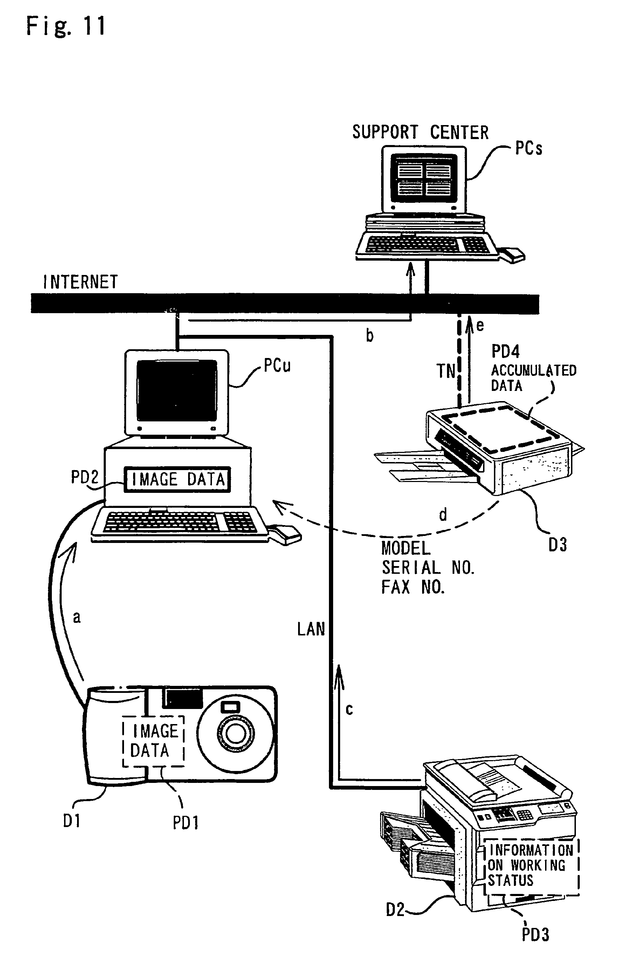

The above embodiment regards the online support that supports the normal operations of the printer. The technique of the present invention is also applicable to support normal operations of a diversity of other devices. Fig. 11 shows the configuration of another online support system in one modified example. Various devices to which the technique of the present invention are applicable are shown in the configuration of Fig. 11. These devices also input or output images. The processed image is thus most effective means to analyze the problem.

As shown in Fig. 11, the technique of the present invention is applied to support normal operations of a digital camera D1 as the device. Image data PD1 shot by the digital camera D1 may be attached as the data processed by the device for the E mail support that utilizes electronic mails. The image data PD1 is transferred to the computer PCu via a predetermined medium or via a cable connecting the digital camera D1 with the computer PCu. Image data PD2 stored in the computer PCu is then attached to the transmission form for the E mail support shown in Fig. 10 and transmitted to the support center PCs (see the arrow b in Fig. 11). In the case where the digital camera D1 is connected to the computer PCu via the cable, the address information to gain access to the digital camera D1 may be input in the transmission form of Fig. 10 and transmitted to the support center PCs. The support center PCs accesses the digital camera D1 via the computer PCu and obtains the image data PD1 stored in the digital camera D1 (see the arrows a and b).

The above embodiment regards the online support to support the operations of the printer PRT locally connected to the computer PCu. The technique of the present invention is also applicable to support the operations of devices that are connected to the computer PCu via a LAN (local area network). Such devices include those naturally using the network for operations, like the printer connected to the LAN, and those using the network for the limited purposes, for example, setting the working environment. In the configuration of Fig. 11, a copying machine D2 is shown as an example connected to the LAN of the limited use. The copying machine D2 is connected to the computer PCu via a LAN. The user specifies the various settings, for example, the magnification and the density of copy, in the computer PCu. This allows duplication in a desired mode without any complicated operations in the copying machine D2. Information PD3 regarding the working status is stored in the copying machine D2. The information PD3 of the working status may include a record of the working status and the image data read by the scanner of the copying machine as the data processed by the device. The present invention is applicable to this configuration to provide both the self support and the E mail support. It is desirable to attach the address information, which is used to gain access to the copying machine D2, to the transmission form of Fig. 10 for the E mail support. The support center PCs accesses the copying machine D2 via the Internet and the LAN based on the address information and obtains the information PD3 of the working status stored in the copying machine D2.

The above description regards the application to the devices that are connected to the computer PCu locally or via the LAN. The technique of the present invention is also applicable to a device that is not connected with the computer PCu. In the configuration of Fig. 11, a facsimile D3 is shown as such an example. The facsimile D3 is not connected with the computer PCu but is connected to a telephone network TN. The support center PCs is accordingly accessible to the facsimile D3. The facsimile D3 stores received and transmitted facsimile data therein as accumulate data D4. The present invention is applicable to this configuration to provide both the self support and the E mail support. The user inputs the model, the serial number, and the fax number of the facsimile D3 in the computer PCu and transmits these pieces of information to the support center PCs for the E mail support (see the arrow d). In the E mail support, the support center PCs transmits a command proper to the facsimile D3 via the telephone network TN and causes the facsimile D3 to send back the accumulated data PD4, which corresponds to the data processed by the device, to the support center PCs (see the arrow e). Data obtained by reading a print of the facsimile D3 with a scanner may be attached as the data processed by the device and transmitted for the E mail support.

Other devices that carry out processing of images include scanners, projectors, liquid-crystal displays, and video cameras. In the case of the scanner, it is desirable to transmit image data representing a scanned image as the data processed by the device for the E mail support. For the purpose of the comparison, image data scanned with another scanner that normally works may be attached. It is also preferable to attach the scanned image data of a certain original, which the manufacturer certainly possesses, for example, a predetermined page in the manufacture's instruction manuals. In the case of the display units, such as the projector and the liquid-crystal display, data representing the actual display status, which is shot with a digital camera, may be transmitted for the E mail support as the data processed by the device. In such cases, it is desirable to attach image data to be displayed. In the case of the video camera, compressed data obtained by compressing motion pictures or still pictures shot with the video camera in a predetermined format like MPEG are transmitted for the E mail support as the data processed by the device. For the purpose of the comparison, it is desirable to attach a video image shot with another video camera that works normally. It is also preferable to attach the shot image data of a certain original, which the manufacturer certainly possesses.

Application of the present invention is not restricted to the devices that input or output image data. For example, the technique of the present invention is applicable to data of cellular phones, MP3 players that process music and audio data, and headphone stereos. In the case of any of such devices, the audio data in a predetermined format are transmitted for the E mail support as the data processed by the device.

As discussed above, the technique of the present invention is applicable to a diversity of devices including those discussed above. In order to use the data processed by the device for the E mail support, it is preferable that the device is connected to the computer or the Internet. But the application of the present invention is not restricted to such devices connectable with the computer or the Internet. For example, the technique of the present invention is applicable to copying machines that are not connectable with the LAN. The arrangement of the present invention is sufficiently applied for the online support of such copying machines although the data processed by the copying machine are not attachable. Another procedure causes both an original and a duplicated print by the copying machine to be read with a scanner and attaches the scanned data for the E mail support.

In the above embodiment, the support center is the manufacturer of the device and provides the online support via the Internet. The technique of the present invention is also applicable to the online support that is provided via an Intranet, for example, in one organization, corporation, or enterprise. A network management section of the enterprise provides the users of certain devices in the enterprise with the online support via the Intranet to support the operations of the devices.

This online support system is readily attained by simply replacing the Internet with the Intranet in the configuration of the embodiment. The configuration of the network does not always require the wired connection but may partly use wireless connection.

## Claims

1. An online support method that gives online support to eliminate a problem arising in a device (PRT; D1), said online support method comprising the steps of:
providing a user of the device with first-stage support information in response to each selecting instruction given by the user, wherein the support information is prepared in advance for elimination of the problem;
upon receiving a request for second-stage support from the device, providing the user of the device with a specific form (120) that enables the user to input and transmit information with regard to the problem; and
receiving from the device the user information input into the specific form together with a browsing record (122) that represents the user's browsing record of the support information.

2. An online support method in accordance with claim 1, wherein the support information is provided in a stepwise manner and interactively in response to the user's requirements.

3. An online support method in accordance with claim 2, wherein the user is provided with a second first-stage support information (Workaround 2) to eliminate a problem when the problem is not eliminated with a first first-stage support information (Workaround 1).

4. An online support method in accordance with claim 1, wherein the step of providing the user with a specific form comprises providing the user with a form having a first part (A-C) that asks the user to input specific information, which is generally required for analysis of the problem, and a second part (D) that enables the user to input arbitrary information with regard to the problem.

5. An online support method in accordance with claim 1 or claim 4, wherein the device carries out either of processing and generation of digital data, and the specific form asks the user to input at least information that is required to specify a result of either of the processing and the generation carried out by the device.

6. An online support method in accordance with claim 5, wherein the device inputs either of image data (PD1) and audio data, and said at least information is either of the image data and the audio data input into the device.

7. An online support method in accordance with claim 5, wherein the device outputs either of an image (PD2) and audio based on digital data, and said at least information represents electronic data representing either of the image and the audio output by the device.

8. An online support method in accordance with claim 5, wherein said at least information includes first information (B) required to identify the device and second information (C) required to specify a working status of the device.

9. An online support method in accordance with claim 8, wherein the first information (B) required to identify the device includes at least one of a model name of the device, an ID number allocated to the individual device, information that identifies a driver program for driving the device, and information that identifies an operating system on which the driver program runs.

10. An online support method in accordance with claim 8, wherein the second information (C) required to specify the working status of the device includes at least one of information that identifies an application program activated on the device when the problem arises, information that identifies an application program used for driving the device and specifies data transmitted to the device, and information that specifies a communication environment of the device.

11. An online support method in accordance with claim 8, wherein the device stores specific information representing the working status of the device in a storage unit, and the second information required to specify the working status of the device comprises information that allows an access to the storage unit.

12. An online support method in accordance with any one of claims 1, 4, and 8,
wherein the specific form also asks the user to input information (A) regarding the individual user.

13. An online support method in accordance with claim 1 or claim 4, wherein the specific form asks the user to input information regarding an operation carried out by the user to eliminate the problem.

14. An online support method in accordance with claim 1 or claim 4, wherein the specific form asks the user to input information regarding the user's browsing record.

15. An online support system that gives information to a client from a server (SV) and thereby carries out online support to eliminate a problem arising in a device (PRT; D1) of the client,
wherein the server comprises:
a first-stage-support information (110) providing unit for providing the client with first-stage-support information in response to each selecting instruction given by a user of the client, wherein the first-stage-support information is prepared in advance for elimination of the problem;
a second-stage-support request receiving unit for receiving a request from the client for second-stage support;
a transmission-form (120) providing unit for providing the client with a specific form in response to said request, said form enabling the client to input and transmit information with regard to the problem, wherein the specific form comprises a first part (A-C) that asks the client to input specific information, which is generally required for analysis of the problem, and a second part (D) that enables the client to input arbitrary information with regard to the problem; and
a user-information receiving unit for receiving from the client the information input into the specific form together with a browsing record (122) that represents the user's browsing record of the support information,
wherein the client comprises:
a browsing record registration unit (122) for registering said browsing record; and
a transmission unit for transmitting the information input into the specific form and the browsing record to the server.

16. A client that gains online support from a predetermined support server to eliminate a problem arising in a device (PRT; D1) of the client, said client comprising:
a support information display unit for receiving first-stage-support information, which is prepared in advance, from the predetermined support server and for displaying the input support information, the support information display unit also being arranged to display a specific form (120) required for second-stage support, which enables the user to input arbitrary information with regard to the problem;
a browsing information registration unit (122) for registering a browsing record of the support information as browsing information; and
a transmission unit for transmitting the information input into the specific form and the browsing information to the predetermined support server.

17. A recording medium in which a program is recorded which, when run on a computer, allows the computer to perform the steps of:
driving a device (PRT; D1);
causing a link to an upper-layered online support Web page, which does not depend upon a model of the device or a problem arising in the device, said Web page being one of a number of support Web pages that provide a client with first-stage support information, which is prepared in advance for elimination of the problem, the Web page being shown in at least one of a setting window (PP) that allows a user of the device to specify settings of the device, and a display window (SM) that displays a working status of the device;
receiving a request for second-stage support from the device and, in response to said request, providing the user of the device with a specific form (120) that enables the user to input and transmit information with regard to the problem; and
receiving from the device the user information input into the specific form together with a browsing record (122) that represents the user's browsing record of the support information.

## Patentansprüche

1. Online-Assistenzverfahren, das Online-Assistenz zum Lösen eines Problems leistet, das an einem Gerät (PRT; D1) auftritt, wobei das Online-Assistenzverfahren die folgenden Schritte umfasst:
Versehen eines Benutzers des Geräts mit Erststufen-Assistenzinformationen als Reaktion auf jeden Auswählbefehl, der durch den Benutzer erteilt wird, wobei die Assistenzinformationen zur Lösung des Problems im Voraus erstellt werden;
Versehen des Benutzers des Geräts nach Empfang einer Anfrage um eine Zweitstufen-Assistenz vom Gerät mit einem spezifischen Formular (120), das den Benutzer befähigt, Informationen in Bezug auf das Problem einzugeben und zu senden; und
Empfangen vom Gerät der Benutzerinformationen, die in das spezifische Formular eingegeben wurden, zusammen mit einem Suchdatensatz (122), der des Benutzers Suchdatensatz der Assistenzinformationen darstellt.

2. Online-Assistenzverfahren nach Anspruch 1, wobei die Assistenzinformationen als Reaktion auf die Forderungen des Benutzers schrittweise und interaktiv bereitgestellt werden.

3. Online-Assistenzverfahren nach Anspruch 2, wobei der Benutzer mit Zweitstufen-Assistenzinformationen (Herantasten 2) zum Lösung eines Problems versehen wird, wenn das Problem nicht mit den Erststufen-Assistenzinformationen (Herantasten 1) gelöst wird.

4. Online-Assistenzverfahren nach Anspruch 1, wobei der Schritt des Versehens eines Benutzers mit einem spezifischen Formular das Versehen des Benutzers mit einem Formular umfasst, das einen ersten Teil (A-C), der den Benutzer auffordert, spezifische Informationen einzugeben, welche im Allgemeinen zur Analyse des Problems benötigt werden, und einen zweiten Teil (D), der den Benutzer befähigt, beliebige Informationen in Bezug auf das Problem einzugeben, aufweist.

5. Online-Assistenzverfahren nach Anspruch 1 oder 4,
wobei das Gerät eines von Verarbeitung und Erzeugung von digitalen Daten durchführt und das spezifische Formular den Benutzer auffordert, mindestens Informationen einzugeben, die benötigt werden, um ein Ergebnis eines von der Verarbeitung und der Erzeugung, die durch das Gerät ausgeführt werden, zu spezifizieren.

6. Online-Assistenzverfahren nach Anspruch 5, wobei das Gerät eines von Bilddaten (PD1) und Audiodaten eingibt und es sich bei den mindesten Informationen um eines von den Bilddaten und den Audiodaten handelt, die in das Gerät eingegeben werden.

7. Online-Assistenzverfahren nach Anspruch 5, wobei das Gerät eines von einem Bild (PD2) und Ton basierend auf digitalen Daten ausgibt und die mindesten Informationen elektronische Daten darstellen, welche eines von der Bildausgabe und der Audioausgabe darstellen, die durch das Gerät ausgegeben werden.

8. Online-Assistenzverfahren nach Anspruch 5, wobei die mindesten Informationen erste Informationen (B), die zum Identifizieren des Geräts benötigt werden, und zweite Informationen (C), die zum Spezifizieren eines Arbeitsstatus des Geräts benötigt werden, umfassen.

9. Online-Assistenzverfahren nach Anspruch 8, wobei die ersten Informationen (B), die zum Identifizieren des Geräts benötigt werden, mindestens eines von einem Modellnamen des Geräts, einer ID-Nummer, die dem einzelnen Gerät zugeordnet ist, Informationen, welche ein Treiberprogramm zum Antreiben des Geräts identifizieren, und Informationen, welche ein Betriebssystem identifizieren, auf welchem das Treiberprogramm läuft, umfassen.

10. Online-Assistenzverfahren nach Anspruch 8, wobei die zweiten Informationen (C), die zum Spezifizieren des Arbeitsstatus des Geräts benötigt werden, mindestens eines von Informationen, die ein Anwendungsprogramm identifizieren, das auf dem Gerät aktiviert wird, wenn das Problem auftritt, Informationen, die ein Anwendungsprogramm identifizieren, das zum Antreiben des Geräts verwendet wird, und Daten spezifizieren, die an das Gerät gesendet werden, und Informationen, die eine Kommunikationsumgebung des Geräts spezifizieren, umfassen.

11. Online-Assistenzverfahren nach Anspruch 8, wobei das Gerät spezifische Informationen, welche den Arbeitsstatus des Geräts darstellen, in einer Speichereinheit speichert, und die zweiten Informationen, die zum Spezifizieren des Arbeitsstatus des Geräts benötigt werden, Informationen umfassen, die einen Zugriff auf die Speichereinheit ermöglichen.

12. Online-Assistenzverfahren nach einem der Ansprüche 1, 4 und 8, wobei das spezifische Formular den Benutzer auch auffordert, Informationen (A) in Bezug auf den einzelnen Benutzer einzugeben.

13. Online-Assistenzverfahren nach Anspruch 1 oder 4, wobei das spezifische Formular den Benutzer auffordert, Informationen in Bezug auf eine Operation einzugeben, welche durch den Benutzer ausgeführt wird, um das Problem zu lösen.

14. Online-Assistenzverfahren nach Anspruch 1 oder 4, wobei das spezifische Formular den Benutzer auffordert, Informationen in Bezug auf den Suchdatensatz des Benutzers einzugeben.

15. Online-Assistenzsystem, das einem Client Informationen von einem Server (SV) gibt und **dadurch** Online-Assistenz durchführt, um ein Problem zu lösen, das in einem Gerät (PRT; D1) des Clients auftritt,
wobei der Server umfasst:
eine Einheit zum Bereitstellen von Erststufen-Assistenzinformationen (110) zum Versehen des Clients mit Erststufen-Assistenzinformationen als Reaktion auf jeden Auswählbefehl, der durch einen Benutzer des Clients erteilt wird, wobei die Erststufen-Assistenzinformationen zur Lösung des Problems im Voraus erstellt sind;
eine Zweitstufen-Assistenzanfrageempfangseinheit zum Empfangen einer Anfrage vom Client um eine Zweitstufen-Assistenz;
eine Einheit zum Bereitstellen eines Sendeformulars (120) zum Versehen des Clients mit einem spezifischen Formular als Reaktion auf die Anfrage, wobei das Formular den Client befähigt, Information in Bezug auf das Problem einzugeben und zu senden, und das spezifische Formular einen ersten Teil (A-C), der den Client auffordert, spezifische Informationen einzugeben, welche im Allgemeinen zur Analyse des Problems benötigt werden, und einen zweiten Teil (D), der den Client befähigt, beliebige Informationen in Bezug auf das Problem einzugeben, umfasst; und
eine Benutzerinformationsempfangseinheit zum Empfangen vom Client der Informationen, die in das spezifische Formular eingegeben wurden, zusammen mit einem Suchdatensatz (122), der des Benutzers Suchdatensatz der Assistenzinformationen darstellt,
wobei der Client umfasst:
eine Suchdatensatzregistriereinheit (122) zum Registrieren des Suchdatensatzes; und
eine Sendeeinheit zum Senden der Informationen, die in das spezifische Formular eingegeben wurden, und des Suchdatensatzes an den Server.

16. Client, der Online-Assistenz von einem vorbestimmten Assistenzserver erhält, um ein Problem zu lösen, das in einem Gerät (PRT; D1) des Clients auftritt, wobei der Client umfasst:
eine Assistenzinformationsanzeigeeinheit zum Empfangen von Erststufen-Assistenzinformationen, welche im Voraus erstellt sind, vom vorbestimmten Assistenzserver und zum Anzeigen der eingegebenen Assistenzinformationen, wobei die Assistenzinformationsanzeigeeinheit auch ausgelegt ist, ein spezifisches Formular (120) anzuzeigen, das für die Erststufen-Assistenz benötigt wird und das den Benutzer befähigt, beliebige Informationen in Bezug auf das Problem einzugeben;
eine Suchinformationsregistriereinheit (122) zum Registrieren eines Suchdatensatzes der Assistenzinformationen als Suchinformationen; und
eine Sendeeinheit zum Senden der Informationen, die in das spezifische Formular eingegeben wurden, und der Suchinformationen an den vorbestimmten Assistenzserver.

17. Aufzeichnungsmedium, in welchem ein Programm aufgezeichnet ist, das, wenn es auf einem Rechner ausgeführt wird, es dem Rechner ermöglicht, die folgenden Schritte auszuführen:
Antreiben eines Geräts (PRT; D1);
Herstellen einer Verbindung mit einer Online-Assistenz-Webseite höherer Ebene, welche nicht von einem Modell des Geräts oder einem Problem, das im Gerät auftritt, abhängt, wobei die Webseite eine einer Anzahl von Assistenz-Webseiten ist, die einen Client mit Erststufen-Assistenzinformationen zur Lösung des Problems versehen, welche im Voraus erstellt sind, und die Webseite in mindestens einem von einem Einstellfenster (PP), das es einem Benutzer ermöglicht, Einstellungen des Geräts zu spezifizieren, und einem Anzeigefenster (SM), das einen Arbeitsstatus des Geräts anzeigt, dargestellt wird;
Empfangen einer Anfrage um eine Zweitstufen-Assistenz vom Gerät und Versehen des Benutzers des Geräts als Reaktion auf die Anfrage mit einem spezifischen Formular (120), das den Benutzer befähigt, Informationen in Bezug auf das Problem einzugeben und zu senden; und
Empfangen vom Gerät der Benutzerinformationen, die in das spezifische Formular eingegeben wurden, zusammen mit einem Suchdatensatz (122), der des Benutzers Suchdatensatz der Assistenzinformationen darstellt.

## Revendications

1. Méthode de support en ligne offrant un support en ligne pour éliminer un problème survenant au niveau d'un périphérique (PRT ; D1), ladite méthode de support en ligne comprenant les étapes suivantes :
fourniture à un utilisateur du périphérique d'une information de support de premier niveau en réponse à chaque instruction de sélection donnée par l'utilisateur, l'information de support étant préparée à l'avance pour l'élimination du problème;
à réception d'une demande pour un support de deuxième niveau en provenance du périphérique, fourniture à l'utilisateur du périphérique d'un formulaire spécifique (120) permettant à l'utilisateur de saisir et transmettre de l'information concernant le problème ; et
réception, en provenance du périphérique, de l'information de l'utilisateur saisie dans le formulaire spécifique, ensemble avec un enregistrement des consultations par l'utilisateur (122) représentant l'enregistrement des consultations par l'utilisateur de l'information de support.

2. Méthode de support en ligne selon la revendication 1, où l'information de support est fournie de manière progressive et de façon interactive en réponse aux demandes de l'utilisateur.

3. Méthode de support en ligne selon la revendication 2, où l'on fournit à l'utilisateur une information de support de deuxième niveau (contournement 2) afin d'éliminer un problème, lorsque le problème n'est pas éliminé avec une information de support de premier niveau (contournement 1).

4. Méthode de support en ligne selon la revendication 1, où l'étape de fourniture à l'utilisateur d'un formulaire spécifique comprend la fourniture à l'utilisateur d'un formulaire avec une première partie (A-C) demandant à l'utilisateur de saisir de l'information spécifique, laquelle est généralement nécessaire pour l'analyse du problème, et une deuxième partie (D) permettant à l'utilisateur de saisir de l'information de manière arbitraire compte tenu du problème.

5. Méthode de support en ligne selon la revendication 1 ou la revendication 4, où le périphérique réalise soit un traitement soit une génération de données numériques, et le formulaire spécifique demandant à l'utilisateur de saisir au moins de l'information nécessaire pour spécifier un résultat soit du traitement soit de la génération réalisé par le périphérique.

6. Méthode de support en ligne selon la revendication 5, où le périphérique fait sortir soit des données d'image (PD1) soit des données audio, et ladite au moins une information étant soit celle des données d'image soit celle des données audio que l'on a fait entrer dans le périphérique.

7. Méthode de support en ligne selon la revendication 5, où le périphérique fait sortir soit une image (PD2) soit du son sur la base de données numériques, et ladite au moins une information représentant des données électroniques qui représentent soit de l'image soit du son émis par le périphérique.

8. Méthode de support en ligne selon la revendication 5, où ladite au moins une information comprend une première information (B) nécessaire pour identifier le périphérique, et une deuxième information (C) nécessaire pour spécifier un statut de travail du périphérique.

9. Méthode de support en ligne selon la revendication 8, où la première information (B) nécessaire pour identifier le périphérique comprend au moins l'un parmi un nom de modèle du périphérique, un numéro d'identification attribué au périphérique individuel, de l'information qui identifie un programme de commande pour commander le périphérique, et de l'information qui identifie un système d'exploitation avec lequel fonctionne le programme de commande.

10. Méthode de support en ligne selon la revendication 8, où la deuxième information (C) nécessaire pour spécifier le statut de travail du périphérique comprend au moins l'une parmi une information qui identifie un programme applicatif activé au niveau du périphérique lorsque le problème apparaît, une information qui identifie un programme applicatif utilisé pour commander le périphérique et qui spécifie des données transmises au périphérique, et une information qui spécifie un environnement de communication du périphérique.

11. Méthode de support en ligne selon la revendication 8, où le périphérique garde en mémoire de l'information spécifique représentant le statut de travail du périphérique dans une unité de mémoire, et la deuxième information nécessaire pour spécifier le statut de travail du périphérique comprenant de l'information permettant un accès à l'unité de mémoire.

12. Méthode de support en ligne selon l'une quelconque des revendications 1, 4 et 8, où le formulaire spécifique demande également à l'utilisateur de saisir de l'information (A) concernant l'utilisateur individuel.

13. Méthode de support en ligne selon la revendication 1 ou la revendication 4, où le formulaire spécifique demande à l'utilisateur de saisir de l'information concernant une opération réalisée par l'utilisateur pour éliminer le problème.

14. Méthode de support en ligne selon la revendication 1 ou la revendication 4, où le formulaire spécifique demande à l'utilisateur de saisir de l'information concernant l'enregistrement des consultations faites par l'utilisateur.

15. Système de support en ligne fournissant de l'information à un client à partir d'un serveur (SV) et réalisant ainsi un support en ligne pour éliminer un problème apparaissant au niveau d'un périphérique (PRT ; D1) du client,
le serveur comprenant :
une unité de fourniture d'informations de support de premier niveau (110), pour fournir au client de l'information de support de premier niveau en réponse à chaque instruction de sélection donnée par un utilisateur du client, l'information de support de premier niveau étant préparée à l'avance pour l'élimination du problème;
une unité de réception de la demande de support de deuxième niveau, pour recevoir une demande du client pour un support de deuxième niveau ;
une unité de fourniture d'un formulaire de transmission (120), afin de fournir au client un formulaire spécifique en réponse à ladite demande, ledit formulaire permettant au client de saisir et transmettre de l'information compte tenu du problème, le formulaire spécifique comprenant une première partie (A-C) demandant au client de saisir de l'information spécifique, laquelle est généralement nécessaire pour l'analyse du problème, et une deuxième partie (D) permettant au client de saisir de l'information de manière arbitraire compte tenu du problème; et
une unité de réception de l'information de l'utilisateur, pour recevoir de la part du client l'information saisie dans le formulaire spécifique, ensemble avec un enregistrement des consultations (122) qui représente l'enregistrement des consultations de l'information de support faites par l'utilisateur,
le client comprenant :
une unité d'enregistrement de l'enregistrement des consultations (122), pour enregistrer ledit enregistrement des consultations ; et
une unité de transmission, pour transmettre l'information saisie dans le formulaire spécifique ainsi que l'enregistrement des consultations, à l'attention du serveur.

16. Client recevant un support en ligne d'un serveur de support prédéfini afin d'éliminer un problème survenant au niveau d'un périphérique (PRT ; D1) du client, ledit client comprenant :
une unité d'affichage d'informations de support pour recevoir de l'information de support de premier niveau, laquelle est préparée à l'avance, de la par du serveur de support prédéfini, et pour afficher l'information de support d'entrée, l'unité d'affichage d'informations de support étant également étudiée pour afficher un formulaire spécifique (120) nécessaire pour un support de deuxième niveau, lequel permet à l'utilisateur de saisir de l'information de manière arbitraire compte tenu du problème ;
une unité d'enregistrement des informations sur les consultations (122), pour enregistrer un enregistrement des consultations du support d'information, en tant qu'information sur les consultations ; et
une unité de transmission, pour transmettre l'information saisie dans le formulaire spécifique ainsi que l'information sur les consultations, à l'attention du serveur de support prédéfini.

17. Support d'enregistrement sur lequel un programme est enregistré lequel, lorsqu'il n'est pas exécuté par l'ordinateur, permet à l'ordinateur de réaliser les étapes suivantes :
commande d'un périphérique (PRT ; D1) ;
établissement d'un lien vers une page Web de support en ligne de couche supérieure, laquelle ne dépend pas d'un modèle du périphérique ou d'un problème apparaissant au niveau du périphérique, ladite page Web étant l'une parmi un certain nombre de pages Web de support qui fournissent à un client de l'information de support de premier niveau, laquelle est préparée à l'avance pour l'élimination du problème, la page Web étant montrée au moins au niveau d'une parmi une fenêtre de configuration (PP) permettant à un utilisateur du périphérique de spécifier la configuration du périphérique, et une fenêtre d'affichage (SM) affichant un statut de travail du périphérique ;
réception d'une demande pour un support de deuxième niveau provenant du périphérique et, en réponse à ladite demande, fourniture à l'utilisateur du périphérique d'un formulaire spécifique (120) permettant à l'utilisateur de saisir et transmettre de l'information compte tenu du problème ; et
réception, en provenance du périphérique, de l'information de l'utilisateur saisie dans le formulaire spécifique, ensemble avec un enregistrement des consultations (122) qui représente l'enregistrement des consultations par l'utilisateur de l'information de support.
